# EUROPEAN PATENT SPECIFICATION

(11) **EP 0 170 443 B1**
(45) Date of publication and mention of the grant of the patent: **06.10.1993**
(21) Application number: 85304877.5
(22) Date of filing: 09.07.1985
(51) Int. Cl.: G06F 15/40

(54) **Method for searching an association matrix**
Suchverfahren für Assoziationsmatrix
Méthode de recherche d'une matrice d'association

(30) Priority: 31.07.1984 US 636466
(43) Date of publication of application: 05.02.1986
(73) Proprietor: ALCATEL N.V., NL-1077 XX Amsterdam (NL)
(72) Inventor: Brooks, Ruven Edward, Shelton Connecticut 06484 (US); Lum, Rosalyn Kam Lin, Stratford Connecticut 06497 (US); Cotton, John Michael, East Norfolk Connecticut 06855 (US)
(74) Representative: Vaufrouard, John Charles

(56) References cited:
- EP-A- 0 100 511
- IEEE TRANSACTION ON COMPUTERS, vol. C-22, no. 8, August 1973, pages 768-772, IEEE, New York, US; D.W. DIGBY: "A search memory for many-to-many comparisons"
- PROCEEDINGS OF THE COMPCON SPRING 1981, IEEE Computer Society Press, 1981, pages 108-111, E.J. Olivier: "Utilizing associative array devices in a database computer design".

## Description

The present invention relates generally to database searching and more particularly to a method for searching an association matrix.

One method of searching for related objects utilising an associative array processor is disclosed in the Proceedings of Compcon. Spring 1981, IEEE Computer Soc. Press, 1981 in article entitled "Utilizing Associative Array Devices in a Data Base Computer Design" by E.J.Oliver . In this method of searching for related objects an associative array processor comprising a plurality of programmable arrays of switches is used to search for the existence of and relationship between various forms of names which are stored in different data stores of the processor.

Most computer applications involve searching a collection of data for items that have a particular characteristic, such as matching a particular key field or having a specific pattern of data values. Examples of this sort of operation include searching a database of credit card numbers to find the status of a particular card, searching a digitally encoded image to find picture elements that match a pattern, searching a database of components and connections in an electronic device to find whether there is a circuit between two components, and searching a word-processing document to find a particular text string. Since searching is part of most computer applications, the speed with which it can be done has a major effect on how fast the applications can be performed.

Association matrices are data structures consisting of nodes and links connecting the nodes together. The links are in one direction, but two nodes may have two links, one in each direction. All links are assumed to have the same cost or weight. In general an association matrix may be used to store relationships between instances or components with the axes of the matrix representing predefined relationships. A specific example of a possible use of such an association matrix would be to represent the connections between components of a digital electronic device. A different association matrix would be used for each type of signal in the system.

Other possible uses of association matrices would be to represent hierarchies of components in which one component is made of several others, object inheritance networks in object oriented computer programming and representations of planar cuts through three dimensional objects in which all parts of the object in the same plane are considered to be linked together.

Major searching operations that are frequently performed on these association matrices are:
finding all of the components connected to a given component;
whether a path exists between two components;
what components are reachable from a given component by a specified number of links;
finding all components that make up another component; and
finding all components of which another component is a part.

On conventional architectures, this problem is solved in one of two ways. Firstly, all of the links to a given node may be stored as a linked list starting at that node. This gives good performance for finding all of the nodes connected to a given node but at a high cost in storage space if the number of interconnections is relatively large. For example, if each of 1,000 nodes is connected to 100 other nodes and a 32 bit pointer is used for each connection, 3.2 megabits of storage will be needed for the interconnections. Additionally, the task of finding all of the components reachable from a given component in a fixed number of links is very slow, requiring frequent stacking operations.

Secondly, the interconnections between components or nodes may be stored in a rectangular matrix of bits, wherein the axes of the matrix represent the components or nodes and a bit set to 1 at a row/column intersection indicates that the two corresponding nodes or components are connected. This approach is economical of storage space, but is usually quite slow on conventional processors since extracting or testing single bits out of a word frequently requires several instructions and many such operations are required to search the matrix.

The present invention seeks to provide a method of searching association matrices with increased speed.

According to the present invention there is provided a method of searching for related objects using an associative array processor as set out in claim 1, characterised in that each object is represented by both a row and column of an associative matrix of the processor which comprises an array of single bit processor cells interconnected in rows and columns and including single bit registers and data memories and which stores relationships between the objects with each relationship being predefined and associated with one of the axes of the matrix and being signified by a logic 1 at the intersection of the row of one object and the column of another object and further characterised in the steps of identifying the row and column position of a selected object to be searched in the association matrix and searching simultaneously all the rows under the column identified with the selected object or searching simultaneously all the columns in a row identified with the selected object to identify a predetermined relationship between the selected object and the other objects, the simultaneous searching of all the rows under an identified column or of all the columns in an identified row being performed through the use of a vertical or horizontal mask which restricts operation of the associative array processor to one or more selected columns or one or more selected rows of the matrix and a status indicator being associated with the single bit registers of the calls to serve as a mask for subsequent instructions during the searching operation.

The simultaneous searching of the rows and columns contributes to the increase in searching speed.

Extraction of the relationships from the matrix is performed quickly and easily on the processor by the manipulation of the vertical and horizontal masks which control the searching mechanism.

In order that the invention and its various other preferred features may be understood more easily, some embodiments thereof will now be described, by way of example only, with reference to the drawings, in which:-
Figure 1 shows diagramatically an associative array processor.
Figure 2 is a block diagram of an associative array processor.
Figure 3 shows the cell interconnections in an array.
Figure 4 shows a layout for an index file.
Figure 5 shows the condition of an associative array processor at a point within a search.
Figure 6 shows the condition of an associative array processor at a point within a search.
Figure 7 shows a simplified association matrix.
Figure 8 shows a directory and association matrix for a 16 x 16 bit array with a directory of 10 pages.
Figures 9, 10, 11a, 11b, 12, 13, 14a, and 14b show various conditions of an associative array processor at different times while conducting a search.

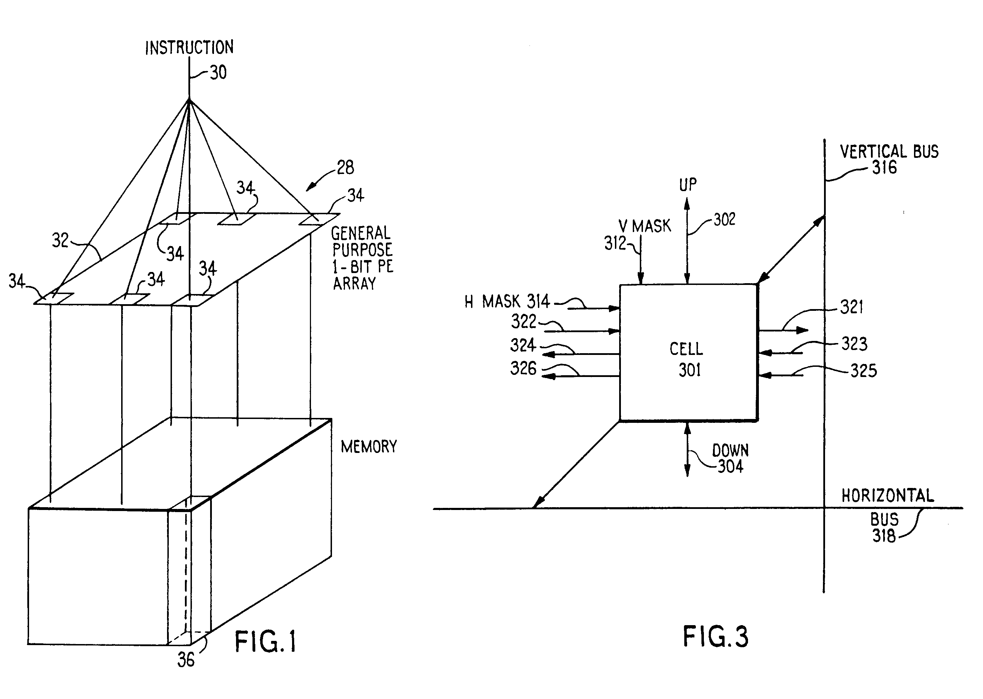

The present invention relates to a method for searching an association matrix using an associative searching technique. The method is designed for use with a particular type of processor known as an associative processor. The associative-type processor provides the features necessary for achieving the associative searching technique described in this invention. An Associative Processor on which the present method may be practiced is described in the U.S. Patent Application, Serial No. 404,242, filed August 2, 1982 which application is assigned to a common assignee along with this application. There are several essential features that an associative processor must have in order to practice the method of the present invention. The associative processor must be formed of an array which is commonly known as an associative array processor or AAP and example of which is shown schematically in Figure 1. The AAP 28 offers a form of sequential processing in which a single sequential control instruction 30 performs the same computation on many elements of data simultaneously. The AAP is formed of a rectangular array 32 of separate single bit processor cells 34. Each processor cell 34 includes its own arithmetic logic unit (ALU), a set of many single bit registers, and a data memory 36 for storing many bits of information as for example 64K bits. The corresponding single bit registers for the various cells form registers for the AAP.

The cells of the array are interconnected in rows and columns so that cells in a row can process multiple bit data elements and data may be transferred vertically between rows.

A means is provided to identify the boundaries of data elements and this may be done by identifying particular bits in a row as being the most significant bit and the least significant bit. The size of the data elements in each tow need not be uniform across the array, in particular when the array is to be used for data base applications, the different data elements within a record will need different ranges of values and hence sizes. As previously mentioned all cells within the array simultaneously obey the same instruction; however, it must be possible to disable or mask both rows and columns of cells so that they will not obey instructions.

When a data element has been defined both as to position and size all the contents of the single bit registers associated with each single bit processor cell within that particular data element position may have arithmetic, shift or boolean instructions performed between them. The result of such instructions will include not only the arithmetic or logical result but also an appropriate status indicator such as overflow for add or subtract, zero for match, plus for compare greater than and minus for compare less than, etc. Both the result and the appropriate indicator are made available to be used as a mask for subsequent instructions.

There is a vertical bus for each column providing communication between all cells of the column and an external output register cell. The vertical bus is established such that only one cell may transmit at any one time. The selection of this cell is accomplished by means of the mask mechanism described above.

Addresses for fetching data from the memory bits are generated in a memory address register. It is possible to transfer data from the output register to the address register. There is also an input register to contain values for loading into the array or for containing values to be used for searching or comparison. The values stored in this input register are made available to all rows, in the appropriate columns, concurrently so that simultaneous search or comparison may take place in all rows, or the content of the input register transferred to all enabled rows.

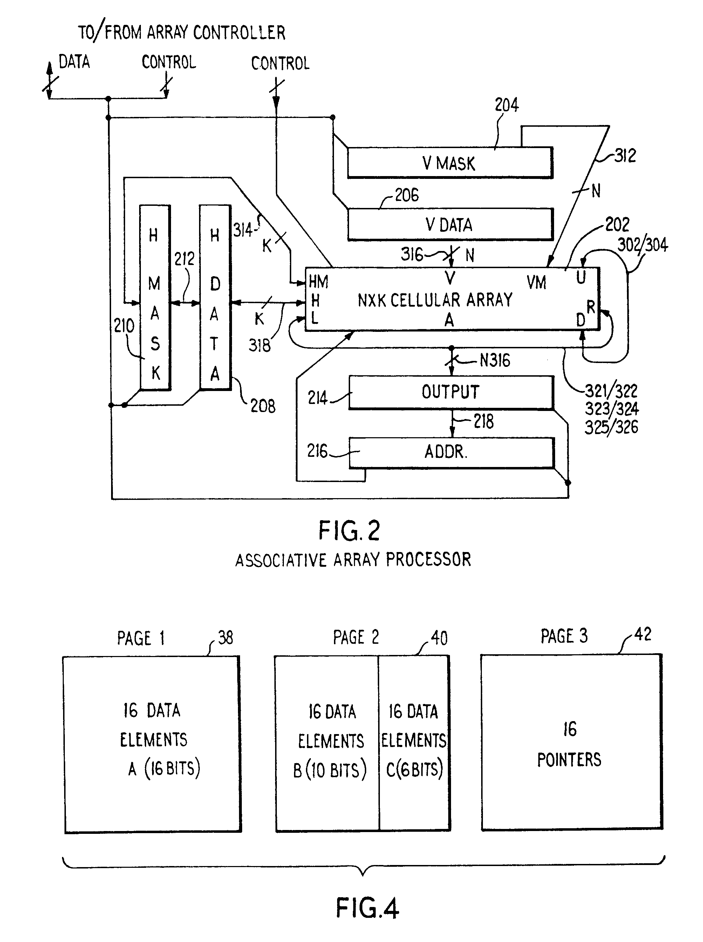

A configuration which provides the above features is shown in Figure 2. An array of cells is shown as 202 and has associated therewith a memory for each cell as previously illustrated in Figure 1.

The interconnections between one cell and its neighbouring cells is shown in Figure 3. The interconnections between cells in a column are shown as 302 and 304 while the interconnection between cells in a row are shown as 321 to 326. The functions of the horizontal connections 321 to 326 between cells in a row are fully described in U.S. Patent Application Serial No. 404,242 previously mentioned. Each cell has a connection 312 to a vertical mask and a connection 314 to a horizontal mask. A vertical bus 316 is also provided for transferring data vertically between cells and the output register 214 and from the input register 206 to the cells in a column while data may be transferred horizontally between cells in a row and the horizontal data/status register 208 using a horizontal bus 318.

Referring again to Figure 2 there is shown a vertical mask register 204 wherein each bit position of the register is connected to the vertical mask connection 312 of each cell of the corresponding column of the array. The vertical mask register 204 provides the vertical mask function previously discussed and in addition provides the means for identifying the boundaries of the data elements in a manner as described in U.S. Patent Application Serial No. 404,242. A horizontal mask register 210 provides the horizontal mask function and has a plurality of bit positions each connected to line 314 of each cell of the corresponding row of the array 202. When the arithmetic instructions previously mentioned are performed the status indications relating to the results of such instructions on the data of each row must be obtained, transferred and stored. This is accomplished using the horizontal bus 318 to transfer the status indicators to the corresponding bit position of a horizontal data register 208 where they may be stored. The horizontal data register may also be called the status register. Horizontal data register 208 is then connected by connection 212 to the horizontal mask register 210 making the status indicators of the arithmetic instructions available as a horizontal mask. The vertical bus 316 connects the corresponding bits of a vertical data input register 206 to all cells in a column and also connects all cells of the column to the corresponding bits of an output data register 214. Data from the output register 214 may be transferred to an address register 216 by means of connection 218. The function of the input and output register may be combined in one input/output register.

The operation of the AAP previously described and shown in Figures 2 and 3 may be better understood by means of a simple example. Suppose we have an index file and that each record or row contains data elements A, B, C any or all of which may be used to identify a particular stored data block, and a pointer to the location of the stored data block indexed in the file. A suggested format for the index file is shown in Figure 4. Assuming a 16 x 16 array is used, then 3 pages of the array memory will contain 16 records with the format shown. Page 1 identified as 38 includes data elements A each having 16 bits for 16 records there being one row for each record and one column for each of the 16 bits of information in data elements A. Page 2 identified as 40 contains data elements B and C for each of the 16 records with data elements B Comprising 10 bits and data elements C comprising 6 bits. Page 3 identified as 42 will contain 16 pointers one for each of the 16 records, to the stored data blocks.

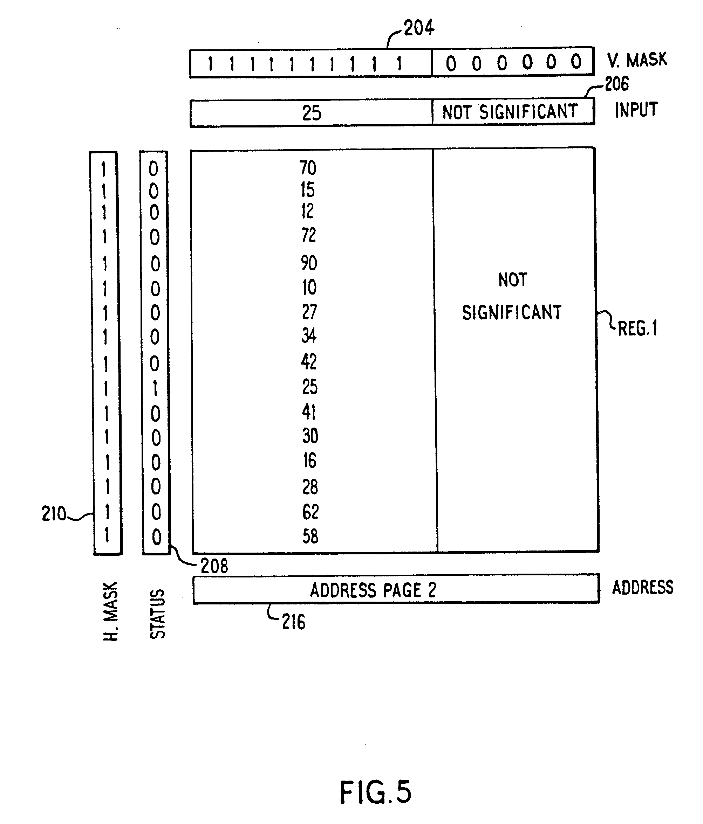

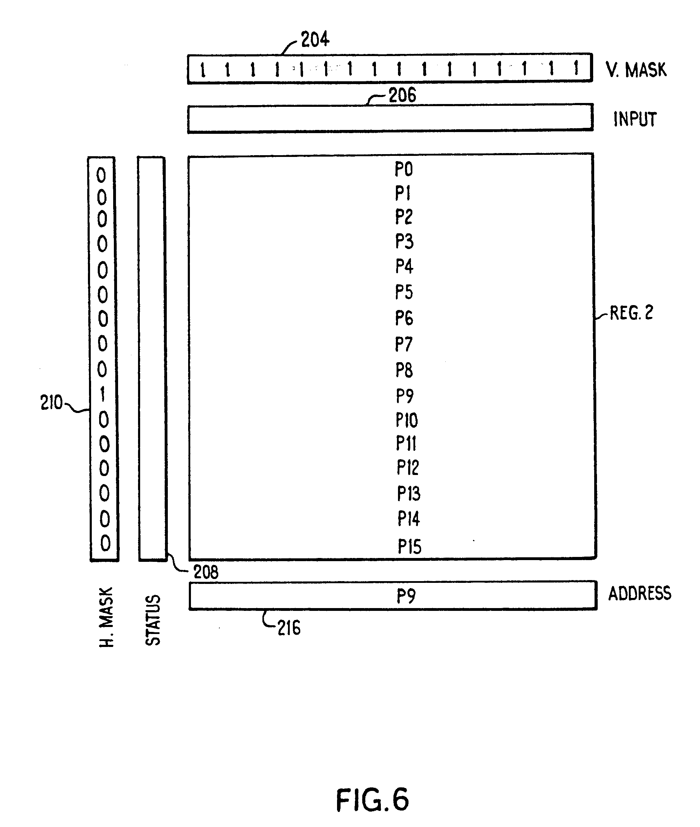

Suppose a page of the index is to be searched for a value 25 in data element B or field B shown as part of page 2 and that only one record in the page contains that value. It should be noted that the values to be searched (Field B) need be in no particular order. The sequence of events, described in relation to Figures 5 and 6, is as follows:
1. The address of page 2 is loaded into the address register 216, as shown in Figure 5, and the fields B and C of the 16 records stored on page 2 are fetched for storage into a register for example register 1 of the set of registers associated with each cell of array 202, illustrated in Figure 2.
2. The value to be searched, i.e. 25, is loaded into the most significant 10 bits of the data input register 206 and a mask enabling the most significant 10 bits of the array i.e. corresponding to field B, is loaded into the vertical mask register 204.
3. A search is performed over the 16 data values in field B for the input data value 25. The row 9 in the example which contains the value 25 matches the searched value 25 and this is indicated by a 1 result in the corresponding bit position in the horizontal data register 208 which is also called the status register.
4. The address register 216 is changed to the address of page 3 contaning the pointers, the pointers of page 3 are fetched and stored in a register for example, register 2 of the set of registers.
5. A mask having all 1's is loaded into the vertical mask register 204 to enable all columns of the array and the contents of the status register 208 are transferred to the horizontal mask register 210. The situation at this step of the process is shown in Figure 6.
6. The particular pointer P9 found in row 9 is enabled by the horizontal mask register 210 and is transferred over the vertical bus 316 to the output register 214 (Figure 2) and thence to the address register 216. This address may now be used to fetch the first page of the stored data block corresponding to entry 25 found in the index.

The method of the present invention, takes advantage of the associative searching features of the AAP described above.

As previously mentioned this method utilises two types of data structures. In order to locate the position of the desired relational information in the association matrix several types of indexing mechanisms could be used. We have chosen to use a directory which is simply a listing of instances or components which are represented by the rows and columns of the matrix. The order in which these instances or components are stored and the methods by which a particular instance is found or new instances are added are not essential features of this invention. Any method known in the art could be used. No information relating the instances or components to one another is contained in the directory, but the directory entries can contain information such as the identity of the components or instances. As an example, the directory may merely be a list of numbered components. These components may be found in the matrix by lookng for the row and column with the same number.

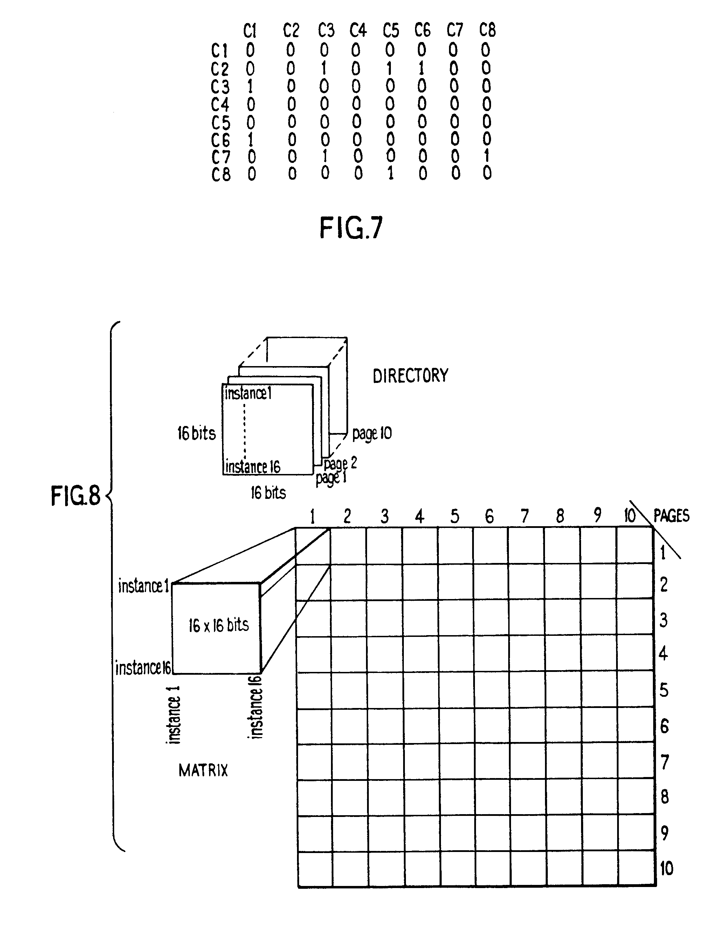

The definition of the type of relationships that exist between the components or instances and how these relationships should be stored can be predefined. Figure 7 represented a matrix for a directory having 8 components or instances. The association matrix shown in Figure 7 illustrates how relational information can be stored. Two types of association, links or relationships can be stored. One is the column-wise relations and the other is the row-wise relations. These relations are predefined before setting up the matrix.

As an example the matrix may be established to contain the hierarchical relationship of components wherein a component is composed of other components and is a part of other components. The relationships are represented by the axes of the matrix. The column-wise relationship may be defined as: all components that "compose or make up" the component identified by the column. If one wished to find all components that form part of component C3 one would search for any bits set to the one level in the third column under C3 and would discover that C3 is composed of components C2 and C7. similarly C1 is composed of C3 and C6, C5 is composed of C2 and C8, C6 is composed of C2, and C8 is composed of C7. Components C2, C4 and C7 are considered primitive parts because they are not made up of any other components as illustrated by the fact that columns C2, C4 and C7 all have zeros formed therein.

The row-wise relationship may be defined to mean: all components that "are part of" higher components. A query to establish this relationship can be performed in the row-wise direction. A search of the second row shows that C2 is used in components C3, C5 and C6. In addition, by doing the row-wise searches on these components, we see that C3 and C6 are used in C1, while C7 is part of C3 and C8, and C8 is part of C5.

This iterative searching mechanism can be performed any number of times in either direction and the mechanism is orchestrated by the manipulation of masks for the rows and columns. The identification of the column and row values is an exercise that will be discussed subsequently, but the importance should be understood on a much higher level because it plays an important part in the searching of very large databases.

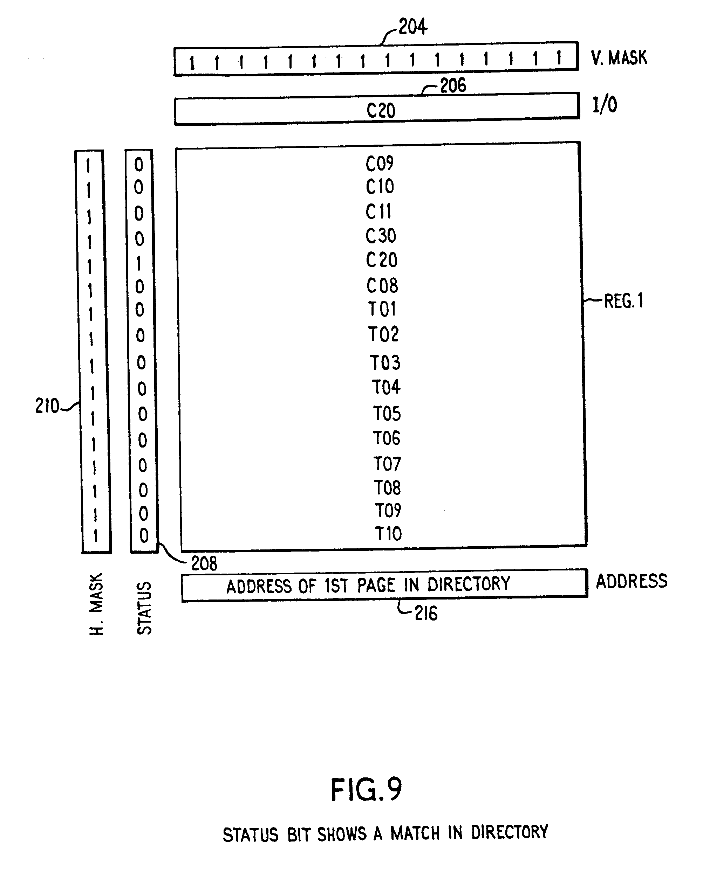

An example of the searching on a larger scale can be explained using the diagram in Figure 8. Here we have arbitrarily chosen to use a 16 x 16 bit array; however, any configuration of bits may be used. Assuming this configuration, the physical layout of a directory of instances and the mapping of the relationships between these instances are shown. For simplicity, a word size will be assumed to be 16 bits and the number of pages in the directory will be 10. By way of example a linear search method will be employed. The associative features of the AAP allow the entries to be placed in any order. Suppose the requested action is to find the relationship of a component called C20 to all other components, then the sequence of events will include:
1) searching the directory for the position of the component which will be represented by a node in the association matrix,
2) setting up the appropriate masks for manipulation of the data stored in the association matrix, and
3) traversing the association matrix for these relationships.

If C20 is found to be on the fifth row of the fifth page in the directory, to find all components that make up C20, a search of column 5 over pages 5, 15, 25, 35, 45, 55, 65, 75, 85 and 95 of the association matrix must be performed. Likewise, to find all components that C20 is a part of, then the search will be performed on the fifth row of pages 51 to 60. If deeper levels of information are required, the traversal of the matrix is performed by further manipulation of masks set by the bits found to be active during the first traversal.

For simplicity we shall decribe the steps for implementing the searching mechanisms described above for only one page in a directory as related to the AAP instruction set.

### Searching the Directory

A linear search method can be used in searching an unordered directory where arbitrary component identification is stored. Given the parameters, the sequence of events for searchng a component C20 in the directory is as follows:
1. A value representing component, C20, to be searched for in the directory is loaded into the input register 206. The horizontal and vertical mask registers 210 and 204 are set to enable all rows and columns. The address of the first page in memory is sent to the memory address register 216 and page 1 of the directory is brought into the array and stored in a register as for example register 1 shown in Figure 9.
2. A parallel comparison or subtraction between the input register 206 and register 1 is performed with the resulting status indication for each row being stored in the corresponding bit of the status register 208. A 1 in the status register means a match was found while a 0 means there was no match.

The contents of the status register 208 are then tested to see if any bits are active i.e. 1. If not, then the address of the next page is generated and the above sequence is repeated. The register states of the above functions are shown in Figure 9, indicating a match in the status register 208 in row 5.

The position of the matched instance within the directory is the principle key to manipulating the association matrix which stores the relationships between the components. If for example, the fifth record on the fifth page matched C20, the bit of the status register corrsponding to the fifth row would contain a 1 when the fifth page is searched.

Although the contents of the mask registers are normally used to enable rows or columns of the array to perform the search on the matrix, an alternative is to perform a logical AND operation between a plane of data containing a row of 1's (or a column, depending on the type of search) corresponding to the row (column) enabled by the mask. The advantage of this alternative is that this pattern may be saved in a page of main memory for use in later operations.

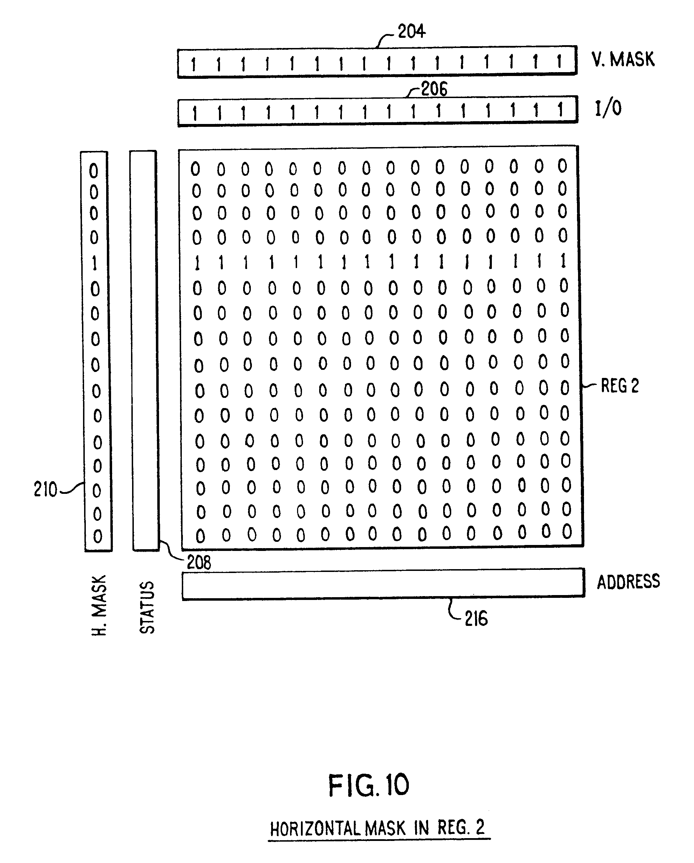

The horizontal mask may be set up as follows. The contents of the status register 208 are moved to the horizontal mask register 210 enabling only the fifth row to respond to the next instruction. A row of all 1's is loaded into the input register 206 and transferred to one of the registers of the set of registers such as register 2 as shown in Figure 10 so that 1's are loaded into the activated row 5. This pattern may be stored for future use.

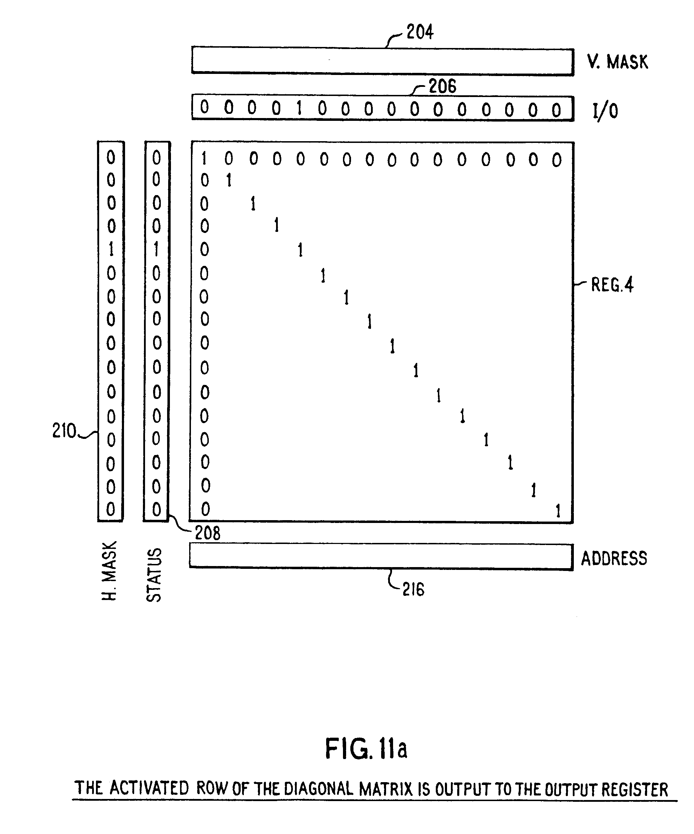

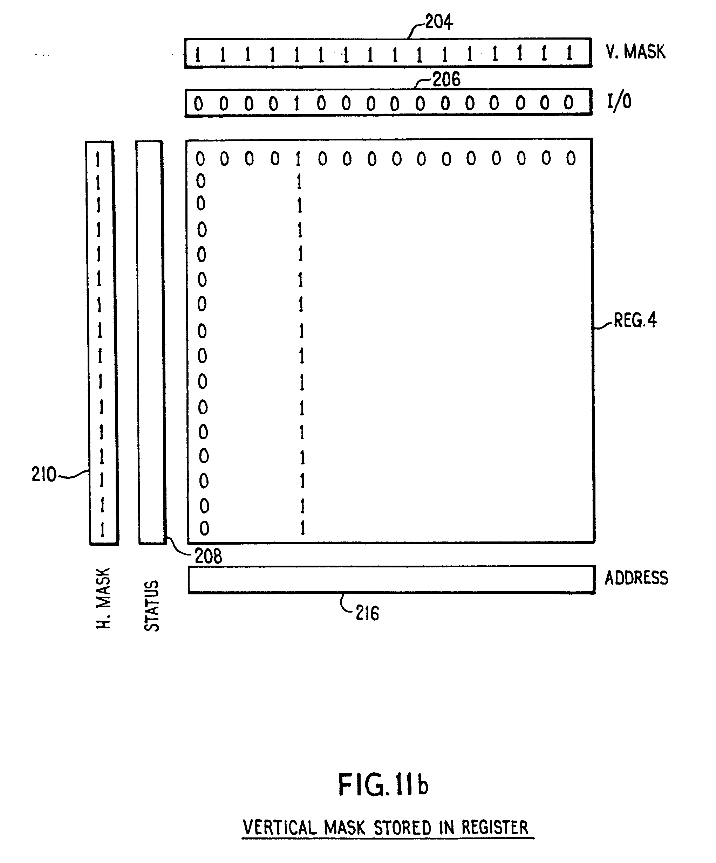

Setting up of the vertical mask is as follows. A plane of data having a diagonal of 1's as shown in Figure 11a may be loaded into a register of the set of registers such as for example register 4. Only the enabled row will be loaded so that in this instance, the fifth bit will be set and this information is then transferred to the input/output register 206. Both of the mask registers 204 and 210 are set to enable all rows and columns and the pattern in the input/output register is transferred to all rows resulting in the pattern shown in Figure 11b.

### Traversing the Association Matrix

The traversal of the association matrix is an iterative procedure. The depth of the search can end when no additional relationships exist or after a set number of relationships have been found, or when a certain value is determined.

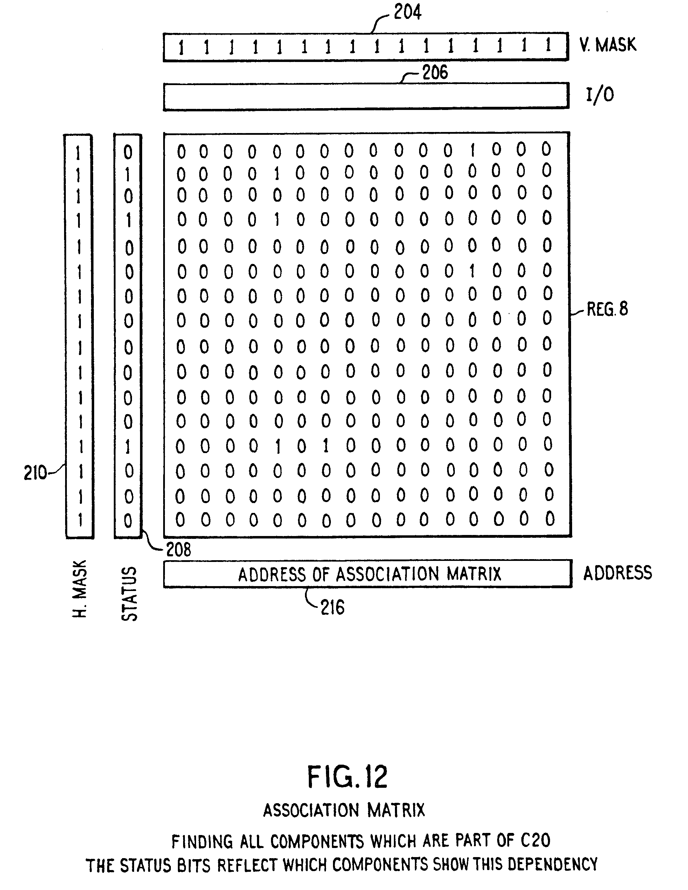

An example of the association matrix that could exist for the directory in Figure 9 is shown in Figure 12. A match for C20 was found in position 5 of the directory, and the horizontal and vertical masks were stored in registers 2 and 4 respectively. To find all the parts that C20 is made of, one would look for all enabled bits in the fifth column and this would continue until no other active bits are found. This can be accomplished by the following:
1. Enable all rows and columns.
2. Load the association matrix data into register 8. Perform an AND operation between register 4, shown in Figure 11b and having the vertical mask stored therein, and register 8. The result of the AND operation is set in the status register 208 as shown in Figure 12 indicating that there is a match in the second, fourth and thirteenth positions relating to C10, C30 and T07 as shown in Figure 9 which are the parts that make up C20.

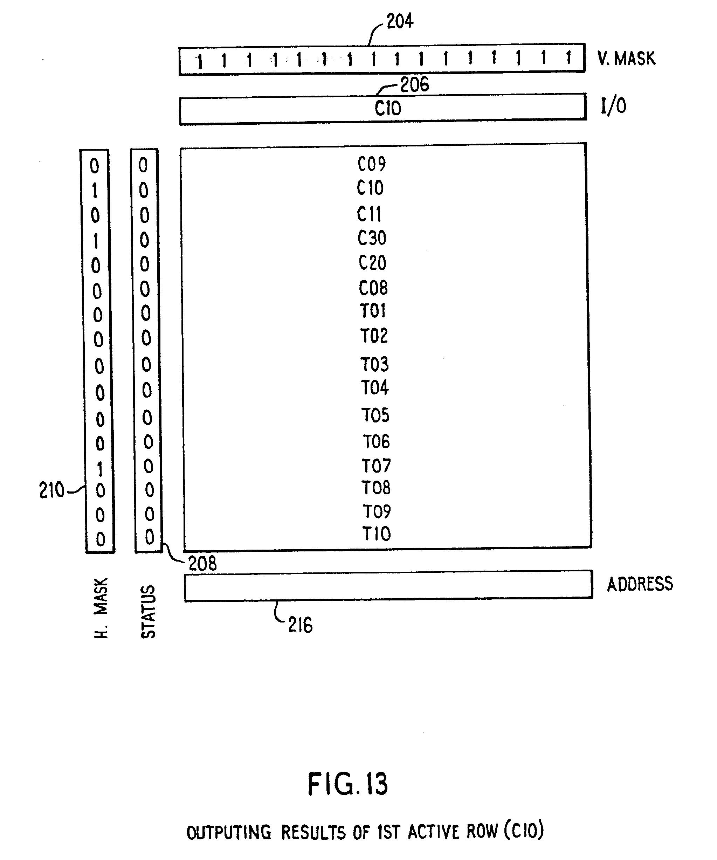

The results can be outputted by relating these status bits locations to the directory by:
1. Moving the status bits to the horizontal mask 210, enabling all bits in the vertical mask 204, loading the directory page, then transferring the contents of the active rows to the output register 206, one at a time, to be printed out as Figure 13.

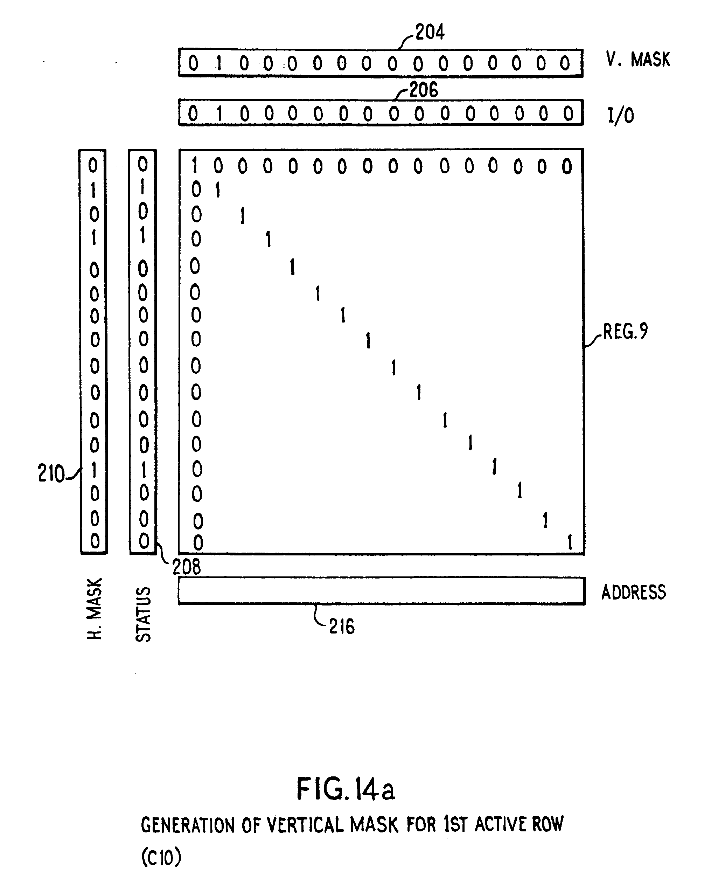

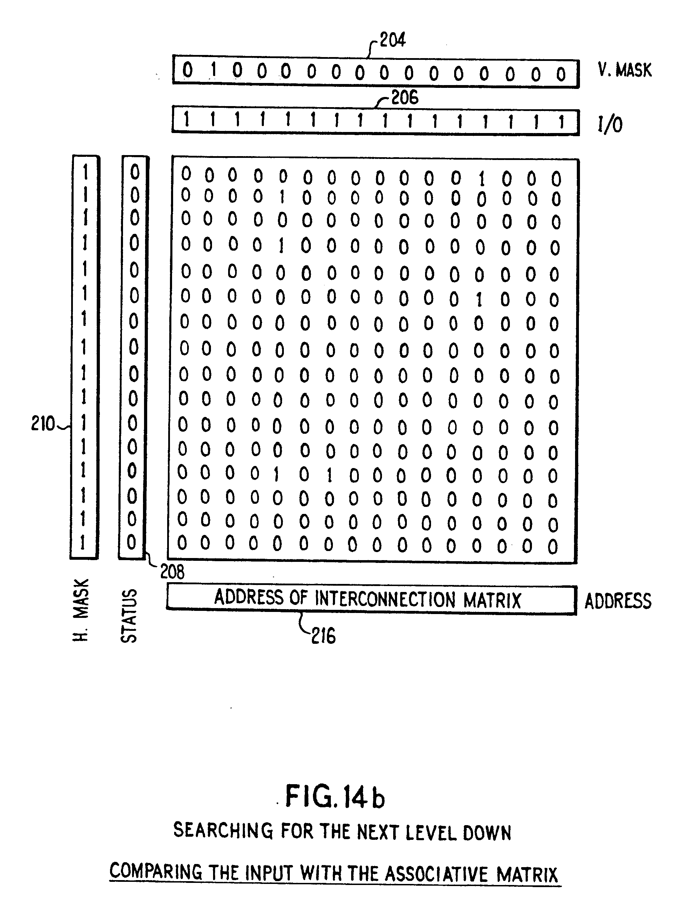

This simple example showed how to traverse one level down. In order to do multi-level traversals, i.e. identify the components that also make up C10, C30, and T07, the following operations are performed iteratively. Because of this iterative searching, the status bits must be saved in a register and loaded to the horizontal mask 210 each time a sub component is searched for its components.
1. Create a new vertical mask for each of the status bits by loading the above status bits into the horizontal mask register 210. This enables the previously set bits to activate their associated rows. Load a new row of diagonal 1's to the register 9 and transfer to the output register 206 the active rows of bits one row at a time. From the output register each row is moved one at a time to the vertical mask 204 as shown in Figure 14a which illustrates the action applied to the bits relating to C10.
2. Set the horizontal mask register and input registers to all 1's.
3. Compare all bits in the active column of the association matrix. Figure 14b shows that there are no other components that make up C10 as indicated by all 0's in the second column. The process for C30 and T07 is performed in the same manner and indicates that no other components make up these components as indicated by all 0's in columns four and thirteen.

## Claims

1. A method of searching for related objects using an associative array processor, (28) wherein a single sequential control instruction (30) performs the same computation on many elements of data simultaneously characterised in that each object is represented by both a row and column of an associative matrix of the processor which comprises an array (32) of single bit processor cells (34) interconnected in rows (321 - 326) and columns (302, 304) and including single bit registers and data memories (36) and which stores relationships between the objects with each relationship being predefined and associated with one of the axes of the matrix and being signified by a logic 1 at the intersection of the row of one object and the column of another object and further characterised in the steps of identifying the row and column position of a selected object to be searched in the association matrix and searching simultaneously all the rows under the column identified with the selected object or searching simultaneously all the columns in a row identified with the selected object to identify a predetermined relationship between the selected object and the other objects, the simultaneous searching of all the rows under an identified column or of all the columns in an identified row being performed through the use of a vertical or horizontal mask (204,210) which restricts operation of the associative array processor (28) to one or more selected columns or one or more selected rows of the matrix and a status indicator (208) being associated with the single bit registers of the cells to serve as a mask for subsequent instructions during the searching operation.

2. A method as claimed in claim 1, characterised in the step of enabling the rows or columns identified in the search for conducting a second iteration of the search method.

3. A method as claimed in claim 2, characterised in the step of using the bits found set to logic 1 in a given row to form a horizontal mask to enable the rows that are to be searched in a next iteration of the search method.

4. A method as claimed in claim 2, characterised in the step of using the bits found set to 1 in a given column to form a vertical mask to enable the columns which are to be searched in a next iteration of the search method.

## Patentansprüche

1. Verfahren zum Suchen nach verwandten Objekten mittels eines assoziativen Matrixrechners (28)
**dadurch gekennzeichnet**, daß jedes Objekt durch eine Reihe und eine Spalte einer assoziativen Matrix von dem Rechner dargestellt ist wobei der Rechner eine Matrix (32) von Ein-Bit-Rechner-Zellen (34) enthält, die zu Reihen (321-326) und Spalten (302, 304) verbunden sind und die Ein-Bit-Register enthalten und Datenspeicher (36) und der die Verhältnisse zwischen den Objekten speichert, wobei jedes Verhältnis vordefiniert und mit einer der Achsen der Matrix assoziiert wird, was durch eine logische 1 im Schnittpunkt der Reihe des einen Objektes mit der Spalte des anderen Objektes angezeigt wird, und bestehend aus den Schritten der Identifikation der Reihen- und Spaltenposition eines ausgewählten Objekts um in der assoziativen Matrix gesucht zu werden, und simultane Suche aller Reihen in der Spalte die mit dem ausgewählten Objekt identifiziert wurden oder simultane Suche aller Spalten in der Reihe die mit dem ausgewählten Objekt identifiziert wurden, um ein vorbestimmtes Verhältnis zwischen dem ausgewählten Objekt und den anderen Objekten zu identifizieren,
wobei die simultane Suche aller Reihen in einer identifizierten Spalte oder aller Spalten in einer identifizierten Reihe durch den Einsatz einer vertikalen oder horizontalen Maske (204, 210) welche die Operation des assoziativen Matrixrechners (28) auf eine oder mehr ausgewählte Spalten oder eine oder mehr ausgewählte Reihen von der Matrix beschränkt und eine Statusanzeige (208) die mit dem Ein-Bit-Register der Zellen verbunden ist, um während der Suchoperation als eine Maske zu dienen.

2. Eine Methode nach Anspruch 1,
**dadurch gekennzeichnet**, daß ermöglicht wird, die Reihen oder die Spalten die während der Suche identifiziert wurden, in einer zweiten Iteration der Suchmethode anzuwenden.

3. Eine Methode nach Anspruch 2,
**dadurch gekennzeichnet**, daß die Bits einer gegebenen Reihe die auf eine logische 1 gesetzt sind, genutzt werden um eine horizontale Maske zu bilden, um zu ermöglichen, daß die Reihen in einer nächsten Iteration der Suchmethode gesucht werden.

4. Eine Methode nach Anspruch 2,
**dadurch gekennzeichnet**, daß die Bits einer gegebenen Spalte die auf eine logische 1 gesetzt sind genutzt werden, um eine vertikale Maske zu bilden, um zu ermöglichen, daß die Spalten in einer nächsten Iteration der Suchmethode gesucht werden.

## Revendications

1. Procédé de recherche d'objets apparentés en utilisant un processeur à réseau associatif (28) caractérisé en ce que chaque objet est représenté par une rangée et une colonne d'une matrice associative du processeur qui comprend un réseau (32) de cellules de processeur à un bit (34) interconnectées en rangées (321-326) et colonnnes (302, 304) et incluant des registres et mémoires de données à un bit (36) et qui enregistre des relations entre les objets, chaque relation étant prédéfinie, associée à l'un des axes de la matrice et signifiée par un 1 logique à l'intersection de la rangée d'un objet et de la colonne d'un autre objet, et caractérisé par les étapes consistant à identifier la position de colonne et de rangée d'un objet sélectionné devant faire l'objet d'une recherche dans la matrice d'association et à faire une recherche simultanément parmi toutes les rangées à partir de la colonne identifiée à l'objet sélectionné ou à faire une recherche simultanément parmi toutes les colonnes à partir de la rangée identifiée à l'objet sélectionné, afin d'identifier une relation prédéterminée entre l'objet sélectionné et les autres objets, la recherche simultanée parmi toutes les rangées à partir d'une colonne identifiée ou toutes les colonnes à partir d'une rangée identifiée étant effectuées grâce à l'emploi d'un masque vertical ou horizontal (204, 210) qui limite le fonctionnement du processeur à réseau associatif (28) à une ou plusieurs colonnes sélectionnées ou une ou plusieurs rangées sélectionnées de la matrice, un indicateur d'état (208) étant associé aux registres à un bit des cellules pour servir de masque durant une opération de recherche.

2. Procédé conforme à la revendication 1, caractérisé par l'étape consistant à valider les rangées ou colonnes identifiées dans la recherche pour la conduite d'une seconde itération du procédé de recherche.

3. Procédé conforme à la revendication 2, caractérisé par l'étape consistant à utiliser les bits trouvés au niveau logique 1 dans une rangée donnée pour former un masque horizontal validant les rangées parmi lesquelles doit être effectuée la recherche dans une itération suivante du procédé de recherche.

4. Procédé conforme à la revendication 2, caractérisé par l'étape consistant à utiliser les bits trouvés au niveau logique 1 dans une colonne donnée pour former un masque vertical validant les colonnes parmi lesquelles doit être effectuée la recherche dans une itération suivante du procédé de recherche.
